# FASCICULE DE BREVET EUROPEEN

(11) **EP 4 204 239 B1**
(45) Date de publication et mention de la délivrance du brevet: **10.07.2024**
(21) Numéro de dépôt: 22700843.0
(22) Date de dépôt: 21.01.2022
(51) Int. Cl.: B60B 27/00

(54) **DISPOSITIF D'ÉTANCHÉITÉ POUR MOYEU DE ROUE MOTRICE ET BOL DE TRANSMISSION A CANNELURES**
DICHTUNGSVORRICHTUNG FÜR ANTRIEBSRADNABE UND VERZAHNTE ÜBERTRAGUNGSSCHALE
SEALING DEVICE FOR DRIVE WHEEL HUB AND SPLINED TRANSMISSION BOWL

(30) Priorité: 22.01.2021 FR 2100633
(43) Date de publication de la demande: 05.07.2023
(73) Titulaire: NTN Europe, 74000 Annecy (FR)
(72) Inventeur: CURTET, Alexandre, 73410 SAINT GIROD (FR); DESNOYER, Fabien, 74000 ANNECY (FR); GOPPE, Sameer, 74150 VALLIERES (FR); POURROY-SOLARI, Vincent, 74230 THONES (FR)
(74) Mandataire: Alatis
(86) Numéro de dépôt international: PCT/EP2022/051301
(87) Numéro de publication internationale: WO 2022/157283

(56) Documents cités:
- EP-A2- 2 042 755
- FR-A1- 3 001 509
- KR-A- 20180 019 875
- US-A1- 2011 077 089

## Description

### Domaine technique de l'invention

L'invention concerne, de façon générale, le domaine technique des véhicules automobiles et plus particulièrement celui des ensembles de moyeu de roue motrice.

L'invention se rapporte plus spécifiquement à un ensemble de moyeu de roue motrice présentant au moins un interstice formé entre le montage de roulement et le bol de transmission et au dispositif d'étanchéité protégeant ce au moins un interstice, et appelé jeu axial dans la suite.

Dans les ensembles de moyeu de roue motrice, un moyeu de roue est guidé en rotation par un palier à roulement fixé mécaniquement à un support de roue. Afin de transmettre aux roues motrices le mouvement de rotation provenant de la transmission du véhicule automobile, le moyeu est relié en rotation à un bol de transmission par un jeu de cannelures. Un tel montage présente un jeu axial nécessitant l'ajout d'un dispositif d'étanchéification de ce jeu axial afin de protéger le jeu de cannelures.

### État de la technique antérieure

Dans la suite de la description, on entend par direction longitudinale ou transversale des axes ou des plans qui sont parallèles ou perpendiculaires à l'axe principal du moyeu de roue et du bol de transmission. Il en va de même pour l'avant et l'arrière qui correspondent respectivement au côté où une roue est montée sur le moyeu, et au côté où la transmission est reliée au bol de transmission. Le haut et le bas sont respectivement orientés selon une direction normale de suspension de la roue.

Du fait de la position très exposée de l'ensemble de moyeu de roue motrice, ses composants sont soumis aux projections provenant de la roue ou de la chaussée. La so-lidarisation en rotation du moyeu de roue motrice et du bol de transmission se fait en général par un jeu de cannelures axiales ou radiales formées sur les parties du moyeu de roue et du bol de transmission coopérants entre elles. Le moyeu de roue est relié mécaniquement à un support de roue par un palier à roulements dont le roulement arrière fait face au bol de transmission.

L'assemblage des cannelures du bol de transmission et du moyeu de roue forme un ou plusieurs interstices entre les parties du moyeu de roue et du bol de transmission en vis-à-vis du fait du contact qui s'établit entre les cannelures. Il est aussi possible qu'un contact continu puisse se former sur l'ensemble du pourtour des cannelures consécutivement au serrage. Par commodité de langage, c'est cette zone de contact avec ou sans interstice qui sera appelé « jeu axial » dans la suite, bien qu'il n'y ait à proprement parler pas de jeu dans l'assemblage du bol de transmission et du moyeu de roue. En fait, ce jeu axial expose les cannelures aux souillures qui peuvent les détériorer.

Le bol de transmission et le moyeu de roue étant immobiles l'un par rapport à l'autre une étanchéification statique est suffisante pour couvrir le jeu axial et ainsi protéger les cannelures.

Des dispositifs d'étanchéification statique de ce jeu axial sont connus. Dans l'art antérieur, ces dispositifs d'étanchéification statiques sont constitués d'un joint d'étanchéité statique relié mécaniquement à une bague intérieure du roulement arrière. D'autre part, le roulement arrière est quant à lui protégé par un joint dynamique, par exemple un joint à cassette, interposé entre la bague intérieure et une bague extérieure du côté du bol de transmission. De plus, un codeur axial est le plus souvent monté contre la bague intérieure du roulement arrière.

Cette configuration conduit à l'emmanchement de nombreuses pièces dans une zone réduite et nécessite un joint d'étanchéité statique de forme complexe et comprenant des parties flexibles assemblées le plus souvent par surmoulage à des armatures métalliques de formes complexes.

Les documents EP 2 042 755 A1 et US 2011/077089 A1 décrivent de tels dispositifs d'étanchéité statiques composites qui sont aptes à couvrir un jeu axial formé entre les cannelures d'une extrémité arrière du moyeu de roue et une face avant d'un bol de transmission. Ces dispositifs d'étanchéité statiques composites présentent un élément d'étanchéité axiale apte à s'appuyer sur une face arrière de bague intérieure d'un roulement du moyeu de roue, et un élément d'étanchéité radiale apte à presser la périphérie d'une extension de bulbe du bol de transmission.

Les joints d'étanchéification de l'art antérieur sont donc onéreux à produire et l'assemblage du moyeu et du bol de transmission est compliqué et donc génère un surcoût. Le prix étant un facteur majeur dans le domaine très concurrentiel de la construction automobile, il y a lieu de considérer une solution pour étanchéifier le jeu axial au niveau des cannelures du bol de transmission et du moyeu qui est moins chère à fabriquer et à monter.

### Exposé de l'invention

La présente invention a pour but de remédier à tout ou partie des inconvénients de l'état de la technique en proposant notamment un dispositif d'étanchéité statique apte à couvrir un jeu axial exposant des cannelures reliant en rotation un moyeu de roue et un bol de transmission.

A cet effet, l'invention vise, selon un premier aspect, un dispositif d'étanchéité statique apte à couvrir un jeu axial formé entre une extrémité arrière de moyeu d'un moyeu de roue et une face avant de bol de transmission d'un bol de transmission. Le dispositif d'étanchéité statique comprend un élément d'étanchéité axiale apte à coopérer avec une face arrière de bague intérieure d'une bague intérieure d'un palier à roulement du moyeu de roue, et un élément d'étanchéité radiale apte à coopérer avec une extension de bulbe du d'un bol de transmission. En outre, ledit dispositif d'étanchéité statique coopère avec une couronne de bouterolle formée à l'extrémité arrière du moyeu pour contribuer à l'étanchéité au niveau de la partie avant dudit dispositif d'étanchéité statique.

Selon un premier mode de réalisation, le dispositif d'étanchéité comprend un deuxième élément d'étanchéité radiale formé par une partie avant dudit dispositif d'étanchéité statique s'appuyant sur la couronne de bouterolle.

Avantageusement, le dispositif d'étanchéité statique comprend un manchon d'étanchéité, l'élément d'étanchéité axiale est formé par une extrémité avant du manchon d'étanchéité, et/ou le premier élément d'étanchéité radiale est réalisé par au moins une partie d'une enveloppe intérieure du manchon d'étanchéité appuyant sur l'extension de bulbe du bol de transmission.

Préférentiellement, une armature est intégrée à une partie du manchon d'étanchéité distincte de l'élément d'étanchéité radiale et apte à être montée serrée sur l'extension de bulbe du bol de transmission.

Avantageusement, le manchon d'étanchéité est réalisé en matière polymère tel que des matériaux thermoplastiques de type PA6 ou PA12 ou des matériaux élastomère de type caoutchouc, NBR, HNBR, ACM ou FKM.

Selon un deuxième mode de réalisation, le dispositif d'étanchéité statique est fretté sur la couronne de bouterolle.

Avantageusement, l'élément d'étanchéité présente une collerette du côté de la bague intérieure et une face avant de la collerette s'appuie sur la face arrière de la bague intérieure, et/ou l'élément d'étanchéité radiale est formé par une lèvre d'étanchéité radiale s'appuyant sur l'extension de bulbe du bol de transmission.

Préférentiellement, la collerette du joint d'étanchéité est frettée sur la bouterolle, une languette située au niveau de la collerette est logée entre la face arrière de la bague intérieure et une couronne de bouterolle, et/ou la lèvre d'étanchéité radiale présente un profil convergeant orienté vers le bol de transmission.

Avantageusement, ledit dispositif d'étanchéité statique (11) est réalisé en matière thermoplastique telle que les TPE, TPP, TPC, TPA, TPV, du polyuréthane, ou des mousses de polyuréthane..

Optionnellement, un dispositif de chicane est agencé sur le pourtour du dispositif d'étanchéité statique du premier ou du deuxième mode de réalisation, et il est apte à coopérer avec un élément complémentaire relié mécaniquement à un support de roue et situé à proximité du dispositif d'étanchéité statique; et/ou

s'étend axialement substantiellement de la face arrière de la bague intérieure à un bulbe du bol de transmission, et/ou un codeur est situé sur une partie du dispositif d'étanchéité statique.

Avantageusement, le codeur est réalisé par des particules ferromagnétiques dispersées dans la matière constituant le dispositif d'étanchéité, ou une matrice polymère surmoulée ou fixée sur le dispositif d'étanchéité.

Selon un deuxième aspect de l'invention, un ensemble de moyeu de roue motrice comprend un palier à roulements comprenant au moins une bague intérieure reliée mécaniquement à une partie rotative d'un moyeu de roue, et un bol de transmission relié mécaniquement au moins en rotation à la partie rotative d'un moyeu de roue de façon à former un jeu axial entre une extrémité arrière de moyeu et une face avant de bol de transmission. L'ensemble de moyeu de roue motrice comprend en outre un dispositif d'étanchéité statique couvrant le jeu axial, et tel que décrit ci-dessus.

Selon un troisième aspect de l'invention, un véhicule automobile comprend au moins un ensemble de moyeu de roue motrice tel que décrit ci-dessus.

Selon un quatrième aspect de l'invention, un procédé de montage du dispositif d'étanchéité statique tel que décrit ci-devant, se déroule comme suit : le manchon d'étanchéité est d'abord emmanché sur l'extension de bulbe du bol de transmission, et ensuite le bol de transmission est approché vers le moyeu de roue jusqu'à ce que l'extrémité avant du manchon d'étanchéité vienne en appuie sur la face arrière de la bague intérieure.

Selon un cinquième aspect de l'invention, un procédé de montage du dispositif d'étanchéité statique tel que décrit ci-devant se déroule comme suit : la collerette du joint d'étanchéité est d'abord fixée sur le moyeu de roue, et ensuite le bol de transmission est approché vers le moyeu de roue et emmanché dans le joint d'étanchéité.

D'autres caractéristiques et avantages de l'invention sont mis en évidence par la description ci-après d'exemples non limitatifs de réalisation des différents aspects de l'invention.

### Brève description des figures

La description se réfère aux figures annexées qui sont aussi données à titre d'exemples de réalisation non limitatifs de l'invention :
[Fig.1] la [Fig.1] illustre une demi-vue en coupe longitudinale d'un ensemble de moyeu de roue motrice ;
[Fig.2] la [Fig.2] montre une vue de détail de l'ensemble de moyeu de roue motrice ;
[Fig.3] la [Fig.3] montre une vue de détail de l'ensemble de moyeu de roue motrice avec un joint court ;
[Fig.4] la [Fig.4] montre une vue de détail de l'ensemble de moyeu de roue motrice avec une chicane ;
[Fig.5] la [Fig.5] montre une vue de détail de l'ensemble de moyeu de roue motrice avec une version alternative du joint statique ; et
[Fig.6] la [Fig.6] montre une vue de détail de l'ensemble de moyeu de roue motrice avec une version alternative courte du joint statique différente de celles définies dans les revendications.

Pour plus de clarté, les éléments identiques ou similaires sont repérés par des signes de référence identiques sur l'ensemble des figures.

### DESCRIPTION DÉTAILLÉE D'UN MODE DE RÉALISATION

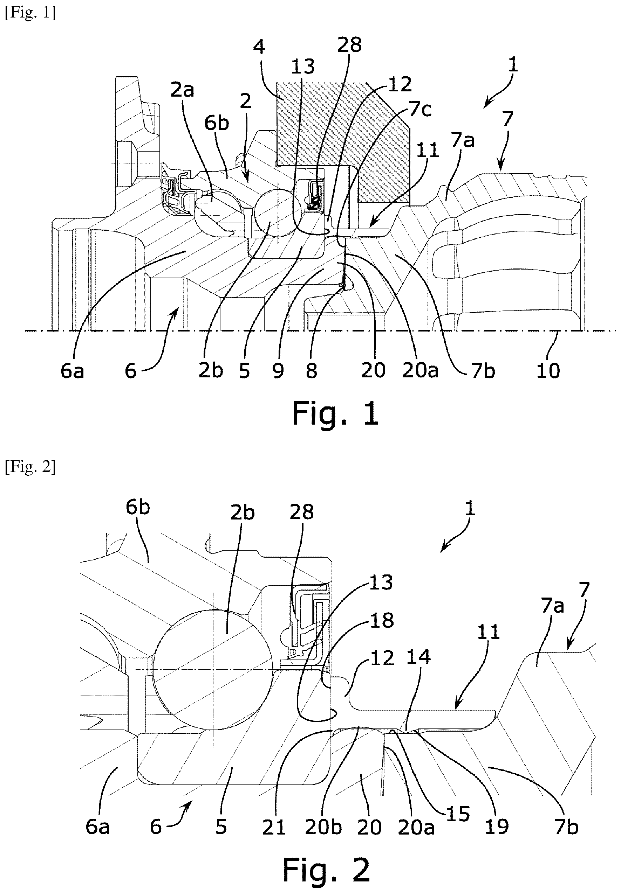

La [Fig.1] illustre un ensemble de moyeu de roue motrice 1 comprenant un moyeu de roue 6 et un bol de transmission 7. Le moyeu de roue 6 est relié à un support de roue 4 par un palier à roulement 2. Le support de roue 4 est relié à une partie d'un châssis de véhicule automobile (non illustré). Le palier à roulement 2, montré à titre d'exemple dans les figures, comprend un roulement à billes avant 2a et un roulement à billes arrière 2b. Tous les deux sont des roulements à billes à contact oblique montés en « O ». La bague intérieure du roulement à billes avant 2a est formée directement dans la partie rotative 6a du moyeu de roue 6 et les bagues extérieures des roulements à billes arrière et avant 2b et 2a sont formées directement dans une bride 6b du moyeu de roue 6. La bague intérieure 5 du roulement à billes arrière 2b est montée sur la partie rotative 6a du moyeu de roue 6 et arrêtée axialement vers l'arrière sur celle-ci par une bouterolle 20 formée à froid à une extrémité arrière de moyeu 9. La bouterolle 20 vient appuyer contre une face arrière 13 de la bague intérieure 5 pour l'immobiliser. Dans l'exemple décrit ici, les roulements à billes avant et arrière 2a et 2b sont des roulements à billes à contact obliques, il va de soi que d'autres corps roulants peuvent être utilisés tels que des rouleaux coniques. De même, les bagues extérieure et intérieure du roulement avant peuvent être rapportées au lieu d'être formées directement dans les parties rotative et statique du moyeu de roue.

Le bol de transmission 7 est formé par un bulbe 7a prolongé vers l'avant par une extension de bulbe 7b. Des cannelures faciales sont formées sur une face avant de bol 7c située à l'extrémité avant de l'extension de bulbe 7b. Ces cannelures faciales coopèrent avec d'autres cannelures faciales formées sur une face arrière de la bouterolle 20a. Les cannelures faciales servent à transmettre un couple moteur à la roue motrice via le moyeu de roue 6. Au lieu des cannelures faciales, le couple moteur peut être transmis par un jeu de cannelures axiales ou tout autre dispositif mécanique apte à solidariser en rotation deux arbres.

Lorsque les cannelures faciales, sur l'extrémité avant de l'extension de bulbe 7b sont engagées dans les cannelures faciales sur la face arrière de la bouterolle 20a, il se forme un jeu axial 8 exposant les cannelures faciales aux souillures provenant des éclaboussures ou des écoulements de liquide sal provenant du milieu dans lequel la roue ou le moyeu auquel elle est fixée opèrent. Les cannelures faciales sur la face arrière de la bouterolle 20a peuvent être formées par diverses techniques de forgeage à froid, telle que la forge orbitale, par exemple lors de la réalisation de la bouterolle.

Le jeu 8 est formé entre l'extrémité avant de l'extension de bulbe 7b et la face arrière de la bouterolle 20a qui appartiennent respectivement au bol de transmission 7 et à la partie rotative du moyeu de roue 6a, reliés entre eux par les cannelures. Ces deux éléments mécaniques tournant à la même vitesse autour d'un axe du moyeu de roue 10, le jeu 8 peut être couvert par un dispositif d'étanchéité statique afin de protéger les cannelures. Dans cet exemple de mise oeuvre de l'invention, le dispositif d'étanchéité couvrant le jeu 8 est un joint d'étanchéité statique 11 décrit dans la suite et illustré à la [Fig.2].

La [Fig.2] illustre un premier exemple de mise en oeuvre du joint d'étanchéité statique 11. Le joint d'étanchéité statique 11 présente une forme substantiellement cylindrique, ou axisymétrique, se terminant sur sa partie avant, orientée vers le moyeu de roue 6, par une collerette 12. La collerette 12 s'étend radialement vers l'extérieur du joint d'étanchéité statique 11 pour former une face avant de collerette 18 disposée transversalement à l'axe du moyeu de roue 10. La face avant de collerette 18 vient appuyer contre la face arrière de la bague intérieure 13 afin de réaliser un élément d'étanchéité axiale du côté du moyeu de roue 6. La face arrière de la bague intérieure 13 présente une surface relativement importante ce qui permet d'obtenir cette étanchéité axiale par différentes formes de réalisation de l'élément d'étanchéité axiale, telles qu'une forme complémentaire de celle de la face arrière de la bague intérieure 13 sur la face avant de la collerette 18 avec laquelle elle vient en contact ou une forme concave. Alternativement, la face avant de collerette 18 peut également présenter une saillance, telle qu'une lèvre ou un renflement, visant à localiser les efforts de contact sur la face arrière de la bague intérieure 13. La force qui plaque la face avant de collerette 18 contre la face arrière de la bague intérieure 13 peut être transmise par le bulbe 7a du bol de transmission 7 qui pousse vers l'avant le joint d'étanchéité par son extrémité arrière.

Préférentiellement, le joint d'étanchéité statique 11 est fretté sur la couronne de la bouterolle 20b. De par la forme convexe de la couronne de bouterolle, le frettage du joint d'étanchéité 11 sur la couronne de la bouterolle 20b assure la tenue mécanique du joint d'étanchéité statique 11 sur la partie rotative du moyeu de roue 6a. Le frettage génère aussi une force qui vient contribuer à plaquer la face avant de collerette 18 contre la face arrière de la bague intérieure 13. La force d'appui engendrée par le frettage contribue à l'établissement d'une pression de la face avant de collerette 18 contre la face arrière de la bague intérieure 13 seule ou en combinaison avec la force d'appui transmise à l'extrémité arrière du joint d'étanchéité statique 11 par le bulbe 7a.

Avantageusement, la face avant de collerette 18 est prolongée vers l'intérieur du joint d'étanchéité statique 11 par une languette 21 qui est logée entre la face arrière de la bague intérieure 13 et la couronne de bouterolle 20b, dans la zone proche de la bague intérieure 13 où le diamètre de la couronne de bouterolle 20b se réduit. Cette languette 21 contribue à améliorer l'étanchéité axiale réalisée par la collerette 12 du côté du moyeu de roue 6 en augmentant localement la pression d'appui de la face avant de collerette 18 contre la face arrière de la bague intérieure 13. D'autre part, la languette 21 vient se coincer entre la face arrière de la bague intérieure 13 et la couronne de la bouterolle 20b qui forme une pente inclinée vers la bague intérieure 5, et réalise ainsi une étanchéité radiale au contact de la bouterolle 20 et une étanchéité axiale au contact avec la face arrière de la bague intérieure 13. Une poussée axiale du joint d'étanchéité statique 11 est induite contre la face arrière de la bague intérieure 13 suite au frettage de la collerette 18 sur la couronne de la bouterolle 20b et à l'action de la pente inclinée formée par la couronne de la bouterolle 20b ce qui tend à pousser la languette 21 vers la face arrière de la bague intérieure 13 améliorant ainsi l'étanchéité entre la languette 21 et la face arrière de la bague intérieure 13. Alternativement, la languette 21 peut seule réaliser l'étanchéité du côté du moyeu de roue 6 comme indiqué ci-dessus.

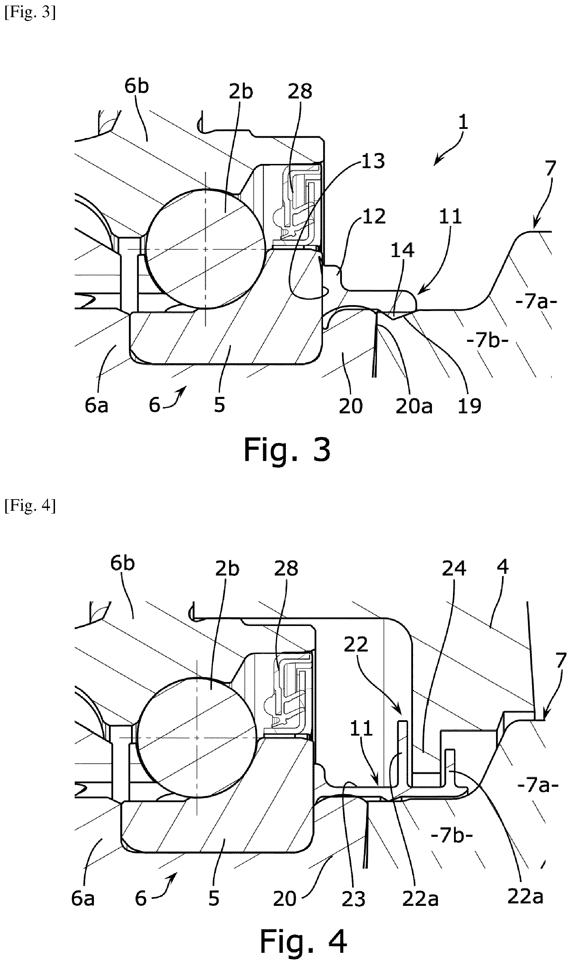

Une étanchéité radiale est réalisée par le joint d'étanchéité statique 11 du côté du bol de transmission par une lèvre d'étanchéité radiale 14 qui vient s'appuyer sur une enveloppe extérieure de l'extension du bulbe 15 du bol de transmission 7. Lorsque le bol de transmission 7 est assemblé avec le moyeu de roue 6, l'extension du bulbe 7b vient s'emmancher dans la lèvre d'étanchéité radiale 14 disposée annulairement à l'intérieur du joint d'étanchéité 11. Afin de faciliter l'emmanchement de l'extension du bulbe 7b dans le joint d'étanchéité statique 11, la lèvre d'étanchéité radiale 14 présente un profile convergeant orienté vers le bol de transmission (7) afin de guider son emmanchement autour de l'extension du bulbe 7b du bol de transmission 7. Dans la [Fig.3], le profile convergeant est formé par un chanfrein 19 orienté vers le bol de transmission 7. D'autres formes de profile convergeant peuvent être utilisées tel qu'un congé.

D'autre part une fois assemblé avec le moyeu de roue 6, le bulbe 7a appuie sur l'extrémité arrière du joint d'étanchéité 11. Ainsi, le joint d'étanchéité 11 est comprimé axialement entre la face arrière de la bague intérieure 13 et le bulbe 7a ce qui garanti un bon appui de la face avant de collerette 18 sur la face arrière de la bague intérieure 13. De plus, l' appui de l'extrémité arrière du joint d'étanchéité 11 sur la partie conique du bulbe 7a génère une pré-étanchéité en complément de la lèvre d'étanchéité radiale 14.

Pour l'assemblage du joint d'étanchéité statique 11, celui-ci est d'abord fretté sur la bouterolle 20 de la partie rotative du moyeu de roue 6a. Durant le frettage, la face avant de la collerette 18 prend appui sur la face arrière de la bague intérieure 13. Optionnellement, la languette 21 vient s'insérer entre la face arrière de la bague intérieure 13 et la partie avant de la couronne de bouterolle 20b. Alternativement ou complémen-tairement au frettage, le coincement de la languette 21 entre la bague intérieure 5 et la bouterolle 20 assure un maintient mécanique par clipsage du joint d'étanchéité statique 11 sur la partie rotative du moyeu de roue 6a. L'amélioration du maintien du joint d'étanchéité statique 11 sur la couronne de bouterolle 20b assure une meilleure cohésion du joint d'étanchéité statique 1 lavée le moyeu de roue 6 durant les phases de montage et les manipulations qui en découlent. Ensuite, le bol de transmission 7 est approché axialement vers la partie rotative du moyeu de roue 6a jusqu'à ce que les cannelures faciales de la partie rotative du moyeu de roue 6 engagent les cannelures faciales du bol de transmission. Durant cette opération, l'extension du bulbe 7b s'emmanche dans la lèvre d'étanchéité radiale 14 du joint d'étanchéité statique 11.

La tenue mécanique du joint d'étanchéité 11 étant assurée par son frettage sur la couronne de bouterolle 20b, le joint d'étanchéité 11 peut être préinstallé sur l'ensemble de moyeu de roue 1 et donc être livré avec celui-ci par le fournisseur de roulement en attente d'être assemblé avec le bol de transmission 7.

La [Fig.3] montre une configuration alternative du joint d'étanchéité statique 11. Dans cette variante, le joint d'étanchéité, au lieu de s'étendre de la face arrière de la bague intérieure 13 au bulbe 7a du bol de transmission 7, s'arrête à la lèvre d'étanchéité radiale 14. L'enveloppe extérieure de l'extension de bulbe 15 présente un diamètre approprié pour garantir une interférence adaptée en vue de générer une bonne pression de la lèvre d'étanchéité radiale 14 sur l'enveloppe extérieure de l'extension de bulbe 15. En outre, la lèvre d'étanchéité radiale 14 présente également optionnellement le chanfrein 19.

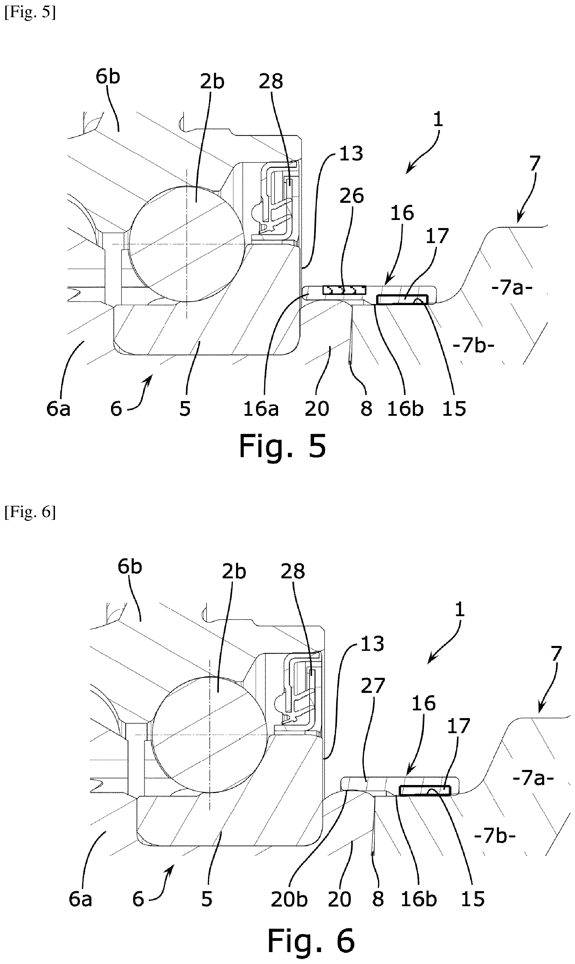

Dans la [Fig.4], un dispositif de chicane 22 est situé sur la périphérie du dispositif d'étanchéité 23, ici le joint d'étanchéité 11. Le dispositif de chicane 22 est formé de deux couronnes de chicanes 22a implantées sur une enveloppe extérieure du dispositif d'étanchéité 23. Ces deux couronnes de chicanes 22a coopèrent avec une extension annulaire 24 du support de roue 4 située autour du joint d'étanchéité 11. Ce dispositif de chicane 22 permet d'améliorer l'étanchéité dynamique du roulement arrière en complément, par exemple, d'un joint à cassette 28. En outre, le dispositif de chicane 22 vient en complément des autres éléments d'étanchéité afin de former une première barrière contre les souillures projetées dans cette zone sensible de l'ensemble de moyeu de roue 1. Les ailes 22a sont suffisamment souple pour que lors du montage elles puissent se déformer afin de passer de part et d'autre de l'extension annulaire 24 et pour permettre leur démoulage. Alternativement, le dispositif de chicane 22 peut être prévu sur un deuxième exemple de réalisation du dispositif d'étanchéité comme montré aux figures 5 et 6 et décrit ci-dessous.

Le joint d'étanchéité 11 est réalisé dans une matière permettant une grande déformation élastique radiale tout en permettant d'exercer une pression suffisante au niveau des zones d'étanchéité axiales et radiales, par exemple une matière thermoplastique souple telle que les TPE, TPP, TPC, TPA, TPV, du polyuréthane, ou des mousses de polyuréthane.

La [Fig.5] montre une vue de détail de l'ensemble de moyeu de roue 1 au niveau du jeu axial 8 et de la bague intérieure 5 du roulement à billes arrière 2b. Dans cet exemple de mise en oeuvre du dispositif d'étanchéité statique permettant de couvrir le jeu axial 8 et ainsi de protéger les cannelures reliant en rotation la partie rotative du moyeu 6a et le bol de transmission 7. Le dispositif d'étanchéité statique de la [Fig.5] présente un manchon d'étanchéité 16 de forme généralement cylindrique, s'étendant sensiblement de la face arrière 13 de la bague intérieure 5 au pied du bulbe 7a du bol de transmission 7. Une extrémité avant 16a du manchon d'étanchéité 16 est plaquée contre la face arrière de la bague intérieure 13 afin de réaliser l'étanchéité axiale protégeant le jeu axial 8 du côté de la bague intérieure 5. La partie arrière du manchon d'étanchéité 16 est frettée sur l'extension de bulbe 7b du bol de transmission. Ainsi, une enveloppe intérieure du manchon d'étanchéité 16b est plaquée contre l'enveloppe extérieure de l'extension du bulbe 15 ce qui réalise l'étanchéité radiale protégeant le jeu axial 8 du côté du bol de transmission 7.

Une variante de cette configuration consiste à fixer mécaniquement, par exemple par surmoulage, le manchon d'étanchéité 16 sur une armature 17 , par exemple en métal, qui est montée serrée sur l'extension du bulbe 7b. Dans ce cas, l'armature 17 assure la tenue mécanique du manchon d'étanchéité 16 sur le bol de transmission 7, alors que l'étanchéité radiale est assurée par la pression d'une partie de l'enveloppe intérieure du manchon d'étanchéité 16b sur l'enveloppe extérieure de l'extension de bulbe 15. Avant le montage de l'armature sur l'extension de bulbe 7b, la surface intérieure du manchon d'étanchéité 16 présente un diamètre supérieur à celui de la partie de l'enveloppe intérieure du manchon d'étanchéité 16b qui vient presser sur l'enveloppe extérieure de l'extension de bulbe 15 pour assurer l'étanchéité radiale.

En pratique, le manchon d'étanchéité 16 peut être plus court vers l'arrière que représenté à la [Fig.5] et s'arrêter avant le pied du bulbe 7a du moment que la surface du manchon d'étanchéité 16 en prise avec l'extension de bulbe soit suffisante pour assurer la tenue mécanique du manchon d'étanchéité 16 sur le bol de transmission 7 et l'étanchéité radiale tel que décrit ci-dessus. Le manchon d'étanchéité 16 est réalisé en matière polymère suffisamment résistante à l'abrasion et souple pour assurer une étanchéité radiale et axiale de bonne qualité, et apte à être fretté sur l'extension de bulbe 7b. Le manchon d'étanchéité 16 peut être réalisé par exemple en matériaux thermoplastiques de type PA6 ou PA12qui peut être chargée de particules de ferrite comme indiqué ci-dessous. Il sera préférentiellement réalisé en matériaux élastomère de type caoutchouc, NBR, HNBR, ACM, FKM, également chargé de particules de ferrites dans certaines zones si nécessaire. En outre, les zones d'étanchéité axiale contre la face arrière de la bague intérieure 13 et les zones d'étanchéité radiale au niveau du bol de transmission seront favorisées par leur profil. Par exemple, des bourrelets d'étanchéité statique peuvent être prévus au niveau des pointes afin d'y localiser ponctuellement la force de contact de l'élastomère.

Pour l'assemblage du manchon d'étanchéité 16, celui-ci est d'abord fretté sur la l'extension du bulbe 7b du bol de transmission. Suite au frettage, l'enveloppe intérieure du manchon d'étanchéité 16b presse sur l'enveloppe extérieure de l'extension du bulbe 15 pour réaliser l'étanchéité radiale du côté du bol de transmission 7. Ensuite, le bol de transmission 7 est approché contre la partie rotative du moyeu de roue 6a jusqu'à ce que les cannelures faciales de la partie rotative du moyeu de roue 6a engagent les cannelures faciales du bol de transmission 7. Durant cette opération, l'extrémité avant du manchon 16a vient s'emmancher sur la couronne de bouterolle 20b et presser contre la face arrière de la bague d'étanchéité 13 pour réaliser l'étanchéité axiale du côté de la bague intérieure 5. Alternativement, ou en combinaison avec l'étanchéité axiale, et comme décrit ci-dessus, lorsque la partie avant du manchon d'étanchéité 27 vient s'emmancher sur la couronne de bouterolle 20b, une deuxième étanchéité radiale peut être réalisée par la partie avant du manchon d'étanchéité 27 qui vient presser sur la dite couronne de la bouterolle 20b.

La tenue mécanique du manchon d'étanchéité 16 étant assurée par son frettage sur l'extension de bulbe 7b, le manchon d'étanchéité peut être fretté sur le bol de transmission et donc être livré avec celui-ci par le fournisseur de transmission afin d'être assemblé sur l'ensemble de moyeu de roue 1.

Afin de pouvoir mesurer la vitesse de rotation de la roue, le joint d'étanchéité 11 ou le manchon d'étanchéité 16 comprend en outre un codeur radial 26 situé sur la partie cylindrique du joint d'étanchéité 11 ou du manchon d'étanchéité 16. Le codeur radial 26 est composé de particules de ferrite ou de toute autre matière ferromagnétique dispersées dans la matière constituant le joint d'étanchéité 11 ou le manchon d'étanchéité 16 de façon à créer des zones polarisées différemment espacées régulièrement sur la périphérie du joint d'étanchéité 11 ou du manchon d'étanchéité 16. Un capteur électromagnétique (non illustré) est positionné radialement en vis-à-vis de la zone du joint d'étanchéité 11 ou du manchon d'étanchéité 16 comprenant le codeur radial 26 afin de mesurer les variations de champ magnétique induites par la rotation du codeur radial 26 avec la partie rotative du moyeu de roue 6a.

Alternativement, le codeur peut être un codeur facial qui sera alors situé par exemple sur la face arrière de la collerette 12 du joint d'étanchéité 11 (non illustré). Au lieu d'être constitué par des particules ferromagnétiques dispersées dans la matière formant le joint d'étanchéité 11, ou le manchon d'étanchéité 16, le codeur peut être aussi formé par des particules ferromagnétiques dispersées dans une matrice en polymère surmoulée ou fixée mécaniquement sur le joint d'étanchéité 11 ou le manchon d'étanchéité 16.

La [Fig.6] montre une variante du manchon d'étanchéité 16 dans laquelle l'étanchéité axiale contre la face arrière de la bague intérieure 13 est remplacée par une deuxième étanchéité radiale. Cette deuxième étanchéité radiale est réalisée par une partie avant du manchon d'étanchéité 27 qui vient presser sur une couronne de la bouterolle 20b. Optionnellement, cette deuxième étanchéité radiale réalisée sur la couronne de la bouterolle 20b peut être combinée à l'étanchéité axiale réalisée contre la face arrière de la bague intérieure 13. La variante de la figure 6 diffère de celles définies dans les revendications en ce qu'elle ne présente pas d'étanchéité axiale réalisée contre la face arrière de la bague extérieure 13.

La [Fig.6] illustre un dispositif d'étanchéité statique qui est apte à couvrir un jeu axial 8 formé entre une extrémité arrière de moyeu 9 d'un moyeu de roue 6 et une face avant de bol de transmission 7c d'un bol de transmission 7. Ce dispositif d'étanchéité sous la forme d'un manchon d'étanchéité 16 comprend : un élément d'étanchéité radiale apte à coopérer avec une extension de bulbe 7b d'un bol de transmission 7, et un deuxième élément d'étanchéité radiale apte à coopérer par pression avec l'extension la couronne de la bouterolle 20b. Ce deuxième élément d'étanchéité radiale protège le jeu axial 8 du côté de la bague intérieure sans nécessiter forcément d'appui axial contre celle-ci. Bien entendu, cette variante du manchon d'étanchéité 16 peut présenter en combinaison toutes les autres caractéristiques décrites ci-dessus pour le manchon d'étanchéité dont l'extrémité avant 16a appuie sur la face arrière de la bague intérieure 13. Par exemple, l'élément d'étanchéité radiale est réalisé par au moins une partie d'une enveloppe intérieure du manchon d'étanchéité 16b appuyant sur l'extension de bulbe 7b du bol de transmission 7.

Ainsi, l'objectif de l'invention est atteint avec un dispositif d'étanchéité statique 11 ou 16 apte à couvrir le jeu axial 8 formé entre l'extrémité arrière de moyeu 9 d'un moyeu de roue 6 et la face avant du bol de transmission 7c. Le dispositif d'étanchéité statique 11 ou 16 comprend un élément d'étanchéité axiale 18 ou 16a apte à coopérer avec la face arrière de la bague intérieure 13 du roulement 2, et un premier élément d'étanchéité radiale 16b apte à coopérer avec l'extension de bulbe 7b du bol de transmission 7. En outre, la partie avant du dispositif d'étanchéité 11 ou 16 coopère avec la couronne de bouterolle 20b formée à l'extrémité arrière du moyeu 9 pour contribuer à l'étanchéité au niveau de la partie avant du dispositif d'étanchéité statique 11 ou 16.

Selon le type de propulsion d'un véhicule automobile, l'ensemble de moyeu de roue motrice 1 est installé aux roues avant pour un véhicule à traction, aux roues arrière pour un véhicule à propulsion, ou aux quatre roues pour un véhicule automobile à traction intégrale.

Comme indiqué dans la description qui précède, les différents aspects de l'invention peuvent-être mis en oeuvre selon le contexte dans des variantes de configuration différentes de celles décrites ci-dessus. Par exemple, les cannelures permettant la transmission du couple moteur à la partie rotative du moyeu de roue peuvent être radiales ou axiales. De même, le dispositif de chicane optionnel peut être installé en complément du joint d'étanchéité à collerette ou du manchon d'étanchéité substantiellement cylindrique.

Naturellement, l'invention est décrite dans ce qui précède à titre d'exemple. Il est entendu que l'homme du métier est à même de réaliser différentes variantes de réalisation de l'invention sans pour autant sortir du cadre de l'invention tel que défini dans les revendications.

## Revendications

1. Dispositif d'étanchéité statique apte à couvrir un jeu axial (8) formé entre une extrémité arrière de moyeu (9) d'un moyeu de roue (6) et une face avant de bol de transmission (7c) d'un bol de transmission (7), ledit dispositif d'étanchéité statique (11, 16) comprenant:
- un élément d'étanchéité (12, 16a) axiale apte à coopérer avec une face arrière de bague intérieure (13) d'une bague intérieure (5) d'un palier à roulement (2) du moyeu de roue (6) ; et
- un premier élément d'étanchéité radiale (14, 16b) apte à coopérer avec une extension de bulbe (7b) du bol de transmission (7) ;
**caractérisé en ce que** ledit dispositif d'étanchéité statique (16) est apte à coopérer avec la couronne (20b) d'une bouterolle (20) formée à l'extrémité arrière du moyeu (9) pour contribuer à l'étanchéité au niveau de la partie avant dudit dispositif d'étanchéité statique (11 ou 16).

2. Dispositif d'étanchéité statique selon la revendication 1, **caractérisé en ce qu'**il comprend en outre un deuxième élément d'étanchéité radiale formé par une partie avant dudit dispositif d'étanchéité statique (11, 16) s'appuyant sur la couronne de bouterolle (20b).

3. Dispositif d'étanchéité statique selon la revendication 2, **caractérisé en ce que** :
- le dispositif d'étanchéité statique comprend un manchon d'étanchéité (16) ;
- l'élément d'étanchéité axiale est formé par une extrémité avant du manchon d'étanchéité (16a) ; et/ou
- le premier élément d'étanchéité radiale est réalisé par au moins une partie d'une enveloppe intérieure du manchon d'étanchéité (16b) appuyant sur l'extension de bulbe (7b) du bol de transmission (7).

4. Dispositif d'étanchéité statique selon la revendication 3, **caractérisé en ce qu'**il comprend en outre :
- une armature (17) intégrée à une partie du manchon d'étanchéité (16) distincte de l'élément d'étanchéité radiale et apte à être montée serrée sur l'extension de bulbe (7b) du bol de transmission (7).

5. Dispositif d'étanchéité statique selon l'une des revendications 3 ou 4, **caractérisé en ce que** le manchon d'étanchéité (16) est réalisé en matière polymère tel que des matériaux thermoplastiques de type PA6 ou PA12 ou des matériaux élastomère de type caoutchouc, NBR, HNBR, ACM ou FKM.

6. Dispositif d'étanchéité statique selon la revendication 1, **caractérisé en ce que** le dispositif d'étanchéité statique (11) est apte à être fretté sur la couronne de bouterolle (20b).

7. Dispositif d'étanchéité statique selon la revendication 6, **caractérisé en ce que**, en position de montage:
- l'élément d'étanchéité présente une collerette (12) du côté de la bague intérieure (5) et une face avant de la collerette (18) s'appuie sur la face arrière de la bague intérieure (13) ; et
- l'élément d'étanchéité radiale est formé par une lèvre d'étanchéité radiale (14) s'appuyant sur l'extension de bulbe (7b) du bol de transmission (7).

8. Dispositif d'étanchéité statique selon la revendication 7, **caractérisé en ce que** :
- la collerette (12) du joint d'étanchéité (11) est frettée sur la bouterolle (20),
- une languette (21) située au niveau de la collerette (12) est logée entre la face arrière de la bague intérieure (13) et une couronne de bouterolle (20b), et/ou
- la lèvre d'étanchéité radiale (14) présente un profil convergeant (19) orienté vers le bol de transmission (7).

9. Dispositif d'étanchéité statique selon l'une des revendications 6 à 8, **caractérisé en ce que** ledit dispositif d'étanchéité statique (11) est réalisé en matière thermoplastique telle que les TPE, TPP, TPC, TPA, TPV, du polyuréthane, ou des mousses de polyuréthane.

10. Dispositif d'étanchéité statique selon l'une des revendications 1 à 9, **caractérisé en ce qu'**il :
- comprend un dispositif de chicane (22) agencé sur le pourtour du dispositif d'étanchéité (11) et apte à coopérer avec un élément complémentaire (24) relié mécaniquement à un support de roue (4) et situé à proximité du dispositif d'étanchéité statique (11); et/ou un codeur (26) est situé sur une partie du dispositif d'étanchéité statique (11); et/ ou
- s'étend axialement substantiellement de la face arrière de la bague intérieure (13) à un bulbe (7a) du bol de transmission (7).

11. Dispositif d'étanchéité statique selon la revendication 10, **caractérisé en ce que** le codeur (26) est réalisé par des particules ferromagnétiques dispersées dans :
- la matière constituant le dispositif d'étanchéité (11 ; 16) ; ou
- une matrice polymère surmoulée ou fixée sur le dispositif d'étanchéité (11 ; 16).

12. Ensemble de moyeu de roue motrice comprenant :
- un palier à roulements (2) comprenant au moins une bague intérieure (5) reliée mécaniquement à une partie rotative d'un moyeu de roue (6a) ; et
- un bol de transmission (7) relié mécaniquement au moins en rotation à la partie rotative d'un moyeu de roue (6a) de façon à former un jeu axial (8) entre une extrémité arrière de moyeu (9) et une face avant de bol de transmission (7c) ;
l'ensemble de moyeu de roue motrice étant **caractérisé en ce qu'**il comprend en outre un dispositif d'étanchéité statique (11 ; 16) couvrant le jeu axial (8), et tel que défini dans l'une quelconque des revendications précédentes.

13. Véhicule automobile **caractérisé en ce qu'**il comprend au moins un ensemble de moyeu de roue motrice selon la revendication précédente.

14. Procédé de montage du dispositif d'étanchéité statique selon l'une quelconque des revendications 2 à 5 et 10 à 11 lorsqu'elles dépendent d'une des revendications 2 à 5, dans lequel :
- le manchon d'étanchéité (16) est d'abord emmanché sur l'extension de bulbe (7b) du bol de transmission (7) ; et ensuite,
- le bol de transmission (7) est approché vers le moyeu de roue (6) jusqu'à ce que le manchon (16) s'emmanche sur ladite couronne de bouterolle (20) et l'extrémité avant du manchon d'étanchéité (16a) vienne en appuie sur la face arrière de la bague intérieure (13).

15. Procédé de montage du dispositif d'étanchéité statique selon l'une quelconque des revendications 7 à 9 et 10 à 11 lorsqu'elles dépendent d'une des revendications 7 à 9, dans lequel :
- la collerette (12) du joint d'étanchéité (11) est d'abord fixée sur le moyeu de roue (6) ; et ensuite
- le bol de transmission est approché vers le moyeu de roue (6) et emmanché dans le joint d'étanchéité (11).

## Patentansprüche

1. Statische Dichtungsvorrichtung, die dazu geeignet ist, ein axiales Spiel (8) abzudecken, das zwischen einem hinteren Nabenende (9) einer Radnabe (6) und einer Getriebegehäusevorderseite (7c) eines Getriebegehäuses (7) gebildet ist, wobei die statische Dichtungsvorrichtung (11, 16) umfasst:
- ein axiales Dichtungselement (12, 16a), das dazu geeignet ist, mit einer Innenringrückseite (13) eines Innenrings (5) eines Wälzlagers (2) der Radnabe (6) zusammenzuwirken; und
- ein erstes radiales Dichtungselement (14, 16b), das dazu geeignet ist, mit einer Wulstverlängerung (7b) des Getriebegehäuses (7) zusammenzuwirken;
**dadurch gekennzeichnet, dass** die statische Dichtungsvorrichtung (16) dazu geeignet ist, mit der Krone (20b) eines an dem hinteren Nabenende (9) gebildeten Stempels (20) zusammenzuwirken, um zu der Abdichtung an dem vorderen Teil der statischen Dichtungsvorrichtung (11 oder 16) beizutragen.

2. Statische Dichtungsvorrichtung nach Anspruch 1,
**dadurch gekennzeichnet, dass** sie ferner ein zweites radiales Dichtungselement umfasst, das durch einen vorderen Teil der statischen Dichtungsvorrichtung (11, 16) gebildet ist, der auf der Stempelkrone (20b) aufliegt.

3. Statische Dichtungsvorrichtung nach Anspruch 2,
**dadurch gekennzeichnet, dass:**
- die statische Dichtungsvorrichtung eine Dichtungshülse (16) umfasst;
- das axiale Dichtungselement durch ein vorderes Ende der Dichtungshülse (16a) gebildet ist; und/oder
- das erste radiale Dichtungselement durch Aufliegen mindestens eines Teils einer inneren Dichtungshülsenverkleidung (16b) auf der Wulstverlängerung (7b) des Getriebegehäuses (7) realisiert ist.

4. Statische Dichtungsvorrichtung nach Anspruch 3,
**dadurch gekennzeichnet, dass** sie ferner umfasst:
- einen Beschlag (17), der in einen Teil der Dichtungshülse (16) integriert ist, der von dem radialen Dichtungselement getrennt ist und dazu geeignet ist, gespannt an der Wulstverlängerung (7b) des Getriebegehäuses (7) montiert zu sein.

5. Statische Dichtungsvorrichtung nach einem der Ansprüche 3 oder 4,
**dadurch gekennzeichnet, dass** die Dichtungshülse (16) aus Polymermaterial, wie thermoplastischen Materialien von dem Typ PA6 oder PA12, oder elastomeren Materialien von dem Typ Kautschuk, NBR, HNBR, ACM oder FKM hergestellt ist.

6. Statische Dichtungsvorrichtung nach Anspruch 1,
**dadurch gekennzeichnet, dass** die statische Dichtungsvorrichtung (11) dazu geeignet ist, auf die Stempelkrone (20b) aufgeschrumpft zu werden.

7. Statische Dichtungsvorrichtung nach Anspruch 6,
**dadurch gekennzeichnet, dass** in Montageposition:
- das Dichtungselement einen Flansch (12) auf der Seite des Innenrings (5) aufweist und eine Flanschvorderseite (18) auf der Innenringrückseite (13) aufliegt; und
- das radiale Dichtungselement durch eine radiale Dichtungslippe (14) gebildet ist, die auf der Wulstverlängerung (7b) des Getriebegehäuses (7) aufliegt.

8. Statische Dichtungsvorrichtung nach Anspruch 7,
**dadurch gekennzeichnet, dass:**
- der Flansch (12) der Dichtung (11) auf den Stempel (20) aufgeschrumpft ist,
- eine Zunge (21), die sich auf der Höhe des Flansches (12) befindet, zwischen der Innenringrückseite (13) und einer Stempelkrone (20b) untergebracht ist, und/oder
- die radiale Dichtungslippe (14) ein konvergierendes Profil (19) aufweist, das in Richtung des Getriebegehäuses (7) gerichtet ist.

9. Statische Dichtungsvorrichtung nach einem der Ansprüche 6 bis 8,
**dadurch gekennzeichnet, dass** die statische Dichtungsvorrichtung (11) aus thermoplastischem Material wie TPE, TPP, TPC, TPA, TPV, Polyurethan oder Polyurethanschäumen hergestellt ist.

10. Statische Dichtungsvorrichtung nach einem der Ansprüche 1 bis 9,
**dadurch gekennzeichnet, dass** sie:
- eine Ablenkvorrichtung (22) umfasst, die auf dem Umfang der Dichtungsvorrichtung (11) eingerichtet ist und dazu geeignet ist, mit einem komplementären Element (24) zusammenzuwirken, das mechanisch mit einem Radträger (4) verbunden ist und sich in der Nähe der statischen Dichtungsvorrichtung (H) befindet; und/oder einen Codierer (26), der sich an einem Teil der statischen Dichtungsvorrichtung (11) befindet; und/oder
- sich axial im Wesentlichen von der Innenringrückseite (13) zu einem Wulst (7a) des Getriebegehäuses (7) erstreckt.

11. Statische Dichtungsvorrichtung nach Anspruch 10,
**dadurch gekennzeichnet, dass** der Codierer (26) aus ferromagnetischen Partikeln hergestellt ist, die dispergiert sind in:
- dem Material, aus dem die Dichtungsvorrichtung (11;16) besteht; oder
- einer Polymermatrix, die auf die Dichtungsvorrichtung (11;16) konfektioniert oder daran befestigt ist.

12. Antriebsradnabenanordnung, umfassend:
- ein Wälzlager (2), das mindestens einen Innenring (5) umfasst, der mechanisch mit einem rotierenden Teil einer Radnabe (6a) verbunden ist; und
- ein Getriebegehäuse (7), das mechanisch mindestens drehbar mit dem rotierenden Teil einer Radnabe (6a) derart verbunden ist, dass ein axiales Spiel (8) zwischen einem hinteren Nabenende (9) und einer Getriebegehäusevorderseite (7c) gebildet wird;
wobei die Antriebsradnabenanordnung **dadurch gekennzeichnet ist, dass** sie ferner eine statische Dichtungsvorrichtung (11; 16) umfasst, die das axiale Spiel (8) abdeckt und wie in einem der vorstehenden Ansprüche definiert ist.

13. Kraftfahrzeug, **dadurch gekennzeichnet, dass** es mindestens eine Antriebsradnabenanordnung nach dem vorstehenden Anspruch umfasst.

14. Verfahren zum Montieren der statischen Dichtungsvorrichtung nach einem der Ansprüche 2 bis 5 und 10 bis 11, wenn sie von einem der Ansprüche 2 bis 5 abhängen, wobei:
- die Dichtungshülse (16) zunächst auf die Wulstverlängerung (7b) des Getriebegehäuses (7) aufgesteckt wird; und anschließend
- das Getriebegehäuse (7) an die Radnabe (6) herangeführt wird, bis die Hülse (16) auf die Stempelkrone (20) aufgesteckt ist und das vordere Ende der Dichtungshülse (16a) an der Innenringrückseite (13) aufliegt.

15. Verfahren zum Montieren der statischen Dichtungsvorrichtung nach einem der Ansprüche 7 bis 9 und 10 bis 11, wenn sie von einem der Ansprüche 7 bis 9 abhängen, wobei:
- der Flansch (12) der Dichtung (11) zunächst an der Radnabe (6) befestigt wird; und anschließend
- das Getriebegehäuse an die Radnabe (6) herangeführt und in die Dichtung (11) aufgesteckt wird.

## Claims

1. A static sealing device able to cover an axial clearance (8) formed between a hub rear end (9) of a wheel hub (6) and a transmission tulip front face (7c) of a transmission tulip (7), said static sealing device (11, 16) comprising:
- an axial sealing element (12, 16a) able to collaborate with an inner ring rear face (13) of an inner ring (5) of a rolling bearing (2) of the wheel hub (6); and
- a first radial sealing element (14, 16b) able to collaborate with a bulb extension (7b) of the transmission tulip (7); **characterized in that** said static sealing device (16) is able to collaborate with the ring (20b) of a dome (20) formed at the rear end of the hub (9) to contribute to sealing at the front part of said static sealing device (11 or 16).

2. The static sealing device according to claim 1, **characterized in that** it further comprises a second radial sealing element formed by a front part of said static sealing device (11, 16) resting on the dome-headed ring (20b).

3. The static sealing device according to claim 2, **characterized in that:**
- the static sealing device comprises a sealing sleeve (16);
- the axial sealing element is formed by a front end of the sealing sleeve (16a); and/or
- the first radial sealing element is made by at least part of an inner envelope of the sealing sleeve (16b) pressing on the extension of the bulb (7b) of the transmission tulip (7).

4. The static sealing device according to claim 3, **characterized in that** it further comprises:
- a reinforcement (17) integrated into a part of the sealing sleeve (16) separate from the radial sealing element and able to be mounted clamped on the bulb extension (7b) of the transmission tulip (7).

5. The static sealing device according to one of claims 3 or 4,
**characterized in that** the sealing sleeve (16) is made of polymer material such as thermoplastic materials of PA6 or PA12 type or elastomeric materials such as rubber, NBR, HNBR, ACM or FKM.

6. The static sealing device according to claim 1, **characterized in that** the static sealing device (11) is able to be shrink-fitted onto the dome-headed ring (20b).

7. The static sealing device according to claim 6, **characterized in that,** in the mounting position:
- the sealing element has a collar (12) on the inner ring (5) side and a front face of the collar (18) bears on the rear face of the inner ring (13); and
- the radial sealing element is formed by a radial sealing lip (14) bearing on the bulb extension (7b) of the transmission tulip (7).

8. The static sealing device according to claim 7, **characterized in that:**
- the collar (12) of the seal (11) is shrink-fitted onto the dome (20),
- a tongue (21) located at the collar (12) is housed between the rear face of the inner ring (13) and a dome-headed ring (20b), and/or
- the radial sealing lip (14) has a converging profile (19) oriented toward the transmission tulip (7).

9. The static sealing device according to one of claims 6 to 8,
**characterized in that** said static sealing device (11) is made of thermoplastic material such as TPE, TPP, TPC, TPA, TPV, polyurethane, or polyurethane foams.

10. The static sealing device according to one of claims 1 to 9,
**characterized in that** it:
- comprises a chicane device (22) arranged on the periphery of the sealing device (11) and able to collaborate with a complementary element (24) mechanically connected to a wheel support (4) and located near the static sealing device (11);
and/or an encoder (26) is located on a part of the static sealing device (11); and/or
- extends axially substantially from the rear face of the inner ring (13) to a bulb (7a) of the transmission tulip (7).

11. The static sealing device according to claim 10, **characterized in that** the encoder (26) is made by ferromagnetic particles dispersed in:
- the material constituting the sealing device (11; 16); or
- a polymer matrix overmolded or attached to the sealing device (11; 16).

12. A drive wheel hub assembly comprising:
- a rolling bearing (2) comprising at least one inner ring (5) mechanically connected to a rotating part of a wheel hub (6a); and
- a transmission tulip (7) mechanically connected at least in rotation to the rotating part of a wheel hub (6a) so as to form an axial clearance (8) between a hub rear end (9) and a transmission tulip front face (7c);
the drive wheel hub assembly being **characterized in that** it further comprises a static sealing device (11; 16) covering the axial clearance (8), and as defined in any one of the preceding claims.

13. A motor vehicle, **characterized in that** it comprises at least one drive wheel hub assembly according to the preceding claim.

14. A method for mounting the static sealing device according to any one of claims 2 to 5 and 10 to 11 when they are dependent on one of claims 2 to 5, wherein:
- the sealing sleeve (16) is first fitted onto the bulb extension (7b) of the transmission tulip (7); and then,
- the transmission tulip (7) is brought closer to the wheel hub (6) until the sleeve (16) is fitted onto said dome-headed ring (20) and the front end of the sealing sleeve (16a) bears against the rear face of the inner ring (13).

15. A method for mounting the static sealing device according to any one of claims 7 to 9 and 10 to 11 when they are dependent on one of claims 7 to 9, wherein:
- the collar (12) of the seal (11) is first attached to the wheel hub (6); and then
- the transmission tulip is brought closer to the wheel hub (6) and fitted into the seal (11).
